# EUROPÄISCHE PATENTSCHRIFT

(11) **EP 2 644 890 B1**
(45) Veröffentlichungstag und Bekanntmachung des Hinweises auf die Patenterteilung: **20.07.2016**
(21) Anmeldenummer: 13157905.4
(22) Anmeldetag: 05.03.2013
(51) Int. Cl.: F03D 80/00, F16F 15/02

(54) **Schwingungsentkoppler für Strömungsenergiewandler**
Vibration isolator for a flow energie converter
Isolateur de vibration pour un dispositif d'exploitation d'énergie d'écoulement

(30) Priorität: 25.03.2012 DE 202012002954 U
(43) Veröffentlichungstag der Anmeldung: 02.10.2013
(73) Patentinhaber: Banzhaf, Hans, 92715 Püchersreuth (DE)
(72) Erfinder: Banzhaf, Hans, 92715 Püchersreuth (DE)
(74) Vertreter: Lermer, Christoph

(56) Entgegenhaltungen:
- US-A- 3 419 238
- US-A1- 2010 032 876
- US-A1- 2011 175 365

## Beschreibung

### TECHNISCHES GEBIET

Die nachfolgend beschriebene Vorrichtung dient dazu, Strömungsenergiewandler, vorzugsweise Wind- und Wasserkraftanlagen mit Drehachse senkrecht oder parallel zur Anströmrichtung, elastisch und damit schwingungsentkoppelt jedoch ausrichtungsstabil zu lagern. Windkraftanlagen tragen in ihre Auflagerung, neben dem statischen Winddruck, ein breites Spektrum an Schwingungen ein, die durch ihre Funktionsweise bedingt und typisch für diese ist. Die Masse der Windkraftanlage auf dem mit einer Biegesteifigkeit versehenen Kragarm (Mast) stellt einen Einmassenbiegeschwinger dar, der Biegeschwingungseigenformen besitzt. Fällt eine der anregenden Frequenzen mit einer der Eigenfrequenzen zusammen, stellt sich Resonanz ein, welche bei geringen Dämpfungen meistens zerstörerisch wirkt.

Diesem Zusammenhang wird in der Praxis dadurch begegnet, dass Masten lang und damit biegeweich ausgeführt werden, um die Resonanz in niedrige Frequenzen zu verlagern, was einer geringen Windenergiedichte und damit geringerem Zerstörungspotential entspricht. Man versucht, die Anlagen im überkritischen Bereich zu betreiben. Der Ansatz extrem hoher Biegesteifigkeit ist wegen des enormen Bauaufwands unwirtschaftlich. Liegen Resonanzen im Betriebsbereich, werden diese derzeit durch Freischalten der Turbine in dem entsprechenden Drehzahlbereich schnell durchfahren. Bei Dach- oder Gebäudeanbindungen sind die Eigenfrequenzen wegen der kurzen Kraglängen durchweg im Betriebsbereich und sehr störend, sowohl für die Anlage, als auch für die Nutzer des Gebäudes. Die meisten Windkrafthersteller und Anbieter haben deshalb Gebäudeanbindungen nicht mehr im Angebot.

Aus der US 2010/0032876 A1 sind Techniken zur Verhinderung von translatorischen Schwingungen einer Tragstruktur durch Verursachen von einer angewinkelten Rotation der Nutzlast bekannt. Ein weiteres Beispiel aus dem Stand der Technik ist aus US2011/0175365 bekannt.

### TECHNISCHE AUFGABE

Das Problem ist also eine horizontal richtungsunabhängig weiche Anbindung der Turbine an den lastabtragenden Untergrund/Tragstruktur(6) zu finden, welche einen bereits kurz nach dem Anlaufen überkritischen Betrieb ermöglicht, ohne dass eine zusätzliche Biegeschwingung um die elastische Auflagerung entsteht. Diese tritt zwangsläufig auf, wenn lediglich Elastomer zwischen die Befestigungsflansche gefügt wird.

### BESCHREIBUNG DER ERFINDUNG

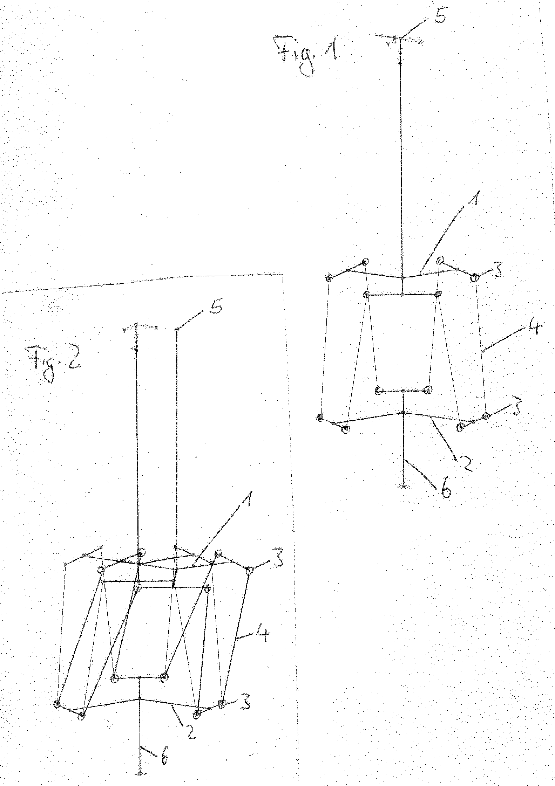

Dieses Problem wird gelöst, indem die Turbine auf dem Oberteil(1) des Schwingungsentkopplers montiert wird (ggf. mit zusätzlicher vertikaler Distanzierung zur Justierung der Schwerpunktslage zum Momentanpol), welche mit wechselweise schräg ansteigenden, um die vertikale Achse mit nach oben abnehmenden Radius rotationssymmetrischer paarweiser Anordnung der Anbindungspunkte(3), an jeweils beiden Enden elastisch gelagerten Koppelstangen(4) mit dem Unterteil(2) verbunden sind, welches an der Tragstruktur(6) befestigt wird. Die am Windschwerpunkt angreifende horizontale Last, bzw. die im Massenschwerpunkt wirkende rückstellende Kraft (idealer Weise fallen diese Schwerpunkte(5) zusammen) haben damit einen deutlich kleineren wirksamen Hebelarm, da der Momentanpol konstruktiv in unmittelbarer Nähe der Schwerpunkte (Wind und Masse) liegt. Das hat zur Folge, dass sich aus der annähernd statischen Windlast eine horizontale Lageverschiebung (Fig. 2) einstellt, um welche die Turbine horizontal mit sehr niedriger Eigenfrequenz schwingen kann. Alle dynamischen Anregungen (ein- und vielfache der Drehzahl) verursachen damit mit zunehmender Frequenz und Windgeschwindigkeit kleiner werdende, dynamische Amplituden. Resonanz findet nur bei sehr niedrigen energiearmen Windgeschwindigkeiten statt und ist durch die der Konstruktion eigenen Dämpfung völlig unproblematisch. Es ist also das Schwingungsverhalten eines langen, schlanken Mastes, auf kurze Anbindungen übertragen, mit dem zusätzlichen Vorteil einer höheren Dämpfung, als sie bei Stahlbauten oder Betontürmen zu erwarten ist und einer wirksamen Körperschallentkopplung.

Eine Turbine, eines norditalienischen Vertikalachsenanlagenherstellers, bei der der Montageflansch etwa 1m in vertikaler Richtung vom Schwerpunkt entfernt ist, wurde, bei einem Eigengewicht der Turbine von ca. 160 kg, auf etwa 1,6 Hz Eigenfrequenz, durch die Anordnung der Koppelstangen(4) (wechselweise schräg ansteigend, um die vertikale Achse mit nach oben abnehmenden Radius rotationssymmetrisch paarweise), und deren Längssteifigkeit (elastische, auf Zug- und Druck belastbare Lagerung(3) an deren Enden jeweils im Ober-(1) und Unterteil(2)), eingestellt. Die Turbine mit Entkoppler befindet sich auf einem kurzen, (ca. 2m langem) Mast. Unmittelbar nach Anlauf der Turbine lassen sich leichte horizontale Bewegungen erkennen, welche binnen kürzester Zeit mit zunehmender Drehzahl verschwinden. Am Mast selbst können keine Schwingungen mehr gefühlt werden. Es liegt damit auch eine wirksame Körperschallentkopplung vor.

Durch die weiche virtuell im Schwerpunkt(5) liegende Lagerung erschließt sich ein bisher nicht nutzbares Feld der Anlagenanbringung mit kurzen Tragstrukturen auf bestehenden Gebäuden aller Art, welches für genehmigungsfreie Bauwerkshöhen erhebliche Vorteile der Windgüte am gegebenen Standort, sowie der Einfachheit der Installation mit sich bringt. Anlagen auf Masten, deren Resonanz sich bisher im Betriebsbereich befindet, können nachgerüstet werden und Löcher im Wechselrichterkennfeld sind nicht mehr erforderlich. Die Belastung der Turbinenstruktur wird deutlich reduziert. Dieser Entkoppler eröffnet (nicht nur) der Kleinwindenergiebranche ein neues Betätigungsfeld. Dach- und Gebäudemontagen verlieren dadurch ihre Schrecken. Die Akzeptanz vertikaler Kleinwindanlagen wird dadurch enorm zunehmen. Die typische angenehme Eigenschaft geringer Luftschallemissionen wird durch eine hochgradige Körperschallisolierung ergänzt.

Sinngemäß lassen sich diese Ergebnisse auf viele Strömungsenergiewandler in verschiedensten Medien, die derzeit mit Schwingungen und Körperschalleintrag kämpfen, anwenden.

## Patentansprüche

1. Strömungsenergiewandlersystem bestehend aus einem Schwingungsentkoppler und einem Strömungsenergiewandler **dadurch gekennzeichnet, dass** der Schwingungsentkoppler zwei vertikal übereinander liegende horizontale Ebenen, Oberteil (1) und Unterteil (2), rotationssymmetrisch paarweise angeordnete, in allen sechs Freiheitsgraden elastische Lager (3) aufweist, in denen wechselseitig rechts- und linkshändig ansteigende, mit sich von unten nach oben verringerndem Radius um die vertikale Achse angeordnete auf Zug und Druck belastbare Koppelstangen (4) enden und dadurch, dass der Strömungsenergiewandler, dessen Massenschwerpunkt im Momentanpol des Schwingungsentkopplers liegt, montiert auf dem Oberteil (1) bei starrer Festhaltung des Unterteils (2), eine durch horizontale Anregung ausgelöste horizontale Translationsschwingung ausführt.

2. Strömungsenergiewandlersystem nach Anspruch 1,
**gekennzeichnet durch**
ein schwingungsfähiges System, bestehend aus dem Strömungsenergiewandler, dem Oberteil (1), den oberen Lagern (3) und anteilig der Koppelstangen (4), das eine erste Eigenfrequenz aufweist, die kleiner als die zu erwartenden anregenden Frequenzen ist..

3. Strömungsenergiewandlersystem nach Anspruch 1,
**dadurch gekennzeichnet,**
**dass** das Strömungsenergiewandlersystem an ihren beiden Enden elastisch gelagerten Koppelstangen in der Art eines bedämpften Mehrmassenschwingers aufweist.

## Claims

1. Flow energy conversion system
comprising a vibration decoupler and a flow energy converter **characterized by** the fact that the vibration decoupler has two horizontal layers which are vertically arranged one above the other, a top part (1) and a bottom part (2), elastic bearings (3) which are elastic in six degrees of freedom and arranged rotationally symmetric and in pairs, in which alternately right- or left-handedly rising coupling rods (4) terminate, the coupling rods having a radius decreasing from bottom to top, arranged around the vertical axis and resisting tension and pressure, and wherein the flow energy converter whose center of mass is in the instantaneous center of rotation of the vibration decoupler, mounted on the top part (1) while the bottom part (2) is fixed inflexibly, performs horizontal translational oscillation triggered by horizontal excitation.

2. Flow energy conversion system in accordance with claim 1,
**characterized by**
an oscillatory system, comprising the flow energy converter, the top part (1), the upper bearings (3) and proportionately the coupling rods (4), which has a first natural frequency, which is smaller than the expected excitatory frequencies.

3. Flow energy conversion system in accordance with claim 1,
**characterized by** the fact that,
the flow energy conversion system has on its both ends elastically mounted coupling rods comparable to an energized multi-mass oscillator.

## Revendications

1. Système de transducteur d'énergie de flux consistant en un découpleur de vibration et un transducteur d'énergie de flux, **caractérisé en ce que** le découpleur de vibration présente deux plans horizontaux situés verticalement l'un au-dessus de l'autre, partie supérieure (1) et partie inférieure (2), des paliers élastiques (3) dans tous les six degrés de liberté, placés par paires en étant symétriques en rotation, dans lesquels se terminent des tiges d'accouplement (4) montant en alternance à droite et à gauche, résistant à la traction et à la pression, placées autour de l'axe vertical avec un rayon qui diminue de bas en haut et **en ce que** le transducteur d'énergie de flux dont le centre de gravité se situe dans l'axe instantané de rotation du découpleur de vibration, monté sur la partie supérieure (1), la partie inférieure (2) étant maintenue fixe et rigide, effectue une vibration en translation horizontale déclenchée par l'excitation horizontale.

2. Système de transducteur d'énergie de flux selon la revendication 1, **caractérisé par** un système susceptible de vibrer comportant le transducteur d'énergie de flux, la partie supérieure (1), les paliers supérieurs (3) et proportionnellement aux tiges d'accouplement (4), système qui présente une première fréquence propre qui est plus petite que les fréquences excitatrices à escompter.

3. Système de transducteur d'énergie de flux selon la revendication 1, **caractérisé en ce que** le système de transducteur d'énergie de flux présente, à ses deux extrémités, des tiges d'accouplement positionnées de manière élastique du type oscillateur multimasse atténué.
